# EUROPÄISCHE PATENTSCHRIFT

(11) **EP 2 424 411 B1**
(45) Veröffentlichungstag und Bekanntmachung des Hinweises auf die Patenterteilung: **19.06.2013**
(21) Anmeldenummer: 10721282.1
(22) Anmeldetag: 30.04.2010
(51) Int. Cl.: A47J 31/44

(54) **Vorrichtung zum bereitstellen von milch für eine kaffeemaschine**
Docking system for a milk container
Système d'arrimage pour un récipient de lait

(30) Priorität: 30.04.2009 EP 09405073
(43) Veröffentlichungstag der Anmeldung: 07.03.2012
(73) Patentinhaber: Jura Elektroapparate AG, 4626 Niederbuchsiten (CH)
(72) Erfinder: ULLMANN, Erich, CH-4622 Egerkingen (CH); BÜTTIKER, Philipp, CH-4625 Oberbuchsiten (CH)
(74) Vertreter: EGLI-EUROPEAN PATENT ATTORNEYS
(86) Internationale Anmeldenummer: PCT/CH2010/000111
(87) Internationale Veröffentlichungsnummer: WO 2010/124404

(56) Entgegenhaltungen:
- EP-A- 0 803 220
- EP-A- 2 036 470
- EP-A1- 2 036 471
- WO-A-2008/077264
- US-A- 5 473 972

## Beschreibung

Die Erfindung betrifft das technische Gebiet der Kaffeemaschinen und insbesondere das Gebiet der Bereitstellung von Milch für ein Kaffeegetränk, insbesondere eine Vorrichtung zum Bereitstellen von Milch für eine Kaffeemaschine.

Kaffeemaschinen, die den Bezug von verschiedenen Milchprodukten wie z.B. Macchiato, Cappuccino, Milchkaffee usw. erlauben, benötigen für die Zuführung der Milch eine sichere, dichte und unterbruchfreie Verbindung mit der in einem Vorratsbehälter gelagerten Milch.

Auf Grund der Notwendigkeit, die Milch gekühlt zu lagern, ergeben sich zwei Möglichkeiten für den Milchbezug.

Wenn Milchprodukte nur gelegentlich bezogen werden, kann es sinnvoll sein, den Milchbehälter in gekühlter Umgebung, vorzugsweise in einem Kühlschrank zu lagern. Er wird nur bei Bedarf hervorgeholt und neben die Kaffeemaschine gestellt. Der Anschluss an die Maschine kann durch Eintauchen eines Saugschlauches in den Behälter vorgenommen werden. Danach wird der Milchbehälter wieder entfernt und die mit Milch in Berührung gekommenen Teile müssen gereinigt werden.

Wenn Milchprodukte allerdings dauerhaft, d.h. in relativ kurzen Zeitabständen bezogen werden sollen, ist es besser, wenn der Milchbehälter in einer beigestellten Kühleinheit permanent an der Maschine angeschlossen bleibt. Da sich Milchprodukte einer zunehmenden Beliebtheit erfreuen, wird diese Anordnung in Zukunft vermehrt zum Einsatz kommen.

Die letztgenannte Anordnung hat allerdings zur Folge, dass ein Anschliessen des Milchbehälters umständlicher wird, da die Leitung(en) durch die isolierende Hülle der Kühleinheit geführt werden müssen. Hinzu tritt, dass aus verschiedenen Gründen der Innenraum des Kühlers für eine vorgegebene Milchmenge so klein wie möglich gehalten wird. Die damit verbundenen Nachteile liegen in einer erschwerten Handhabung beim Einrichten für den Milchbezug wie auch für die Reinigung, in längeren Schlauchleitungen und somit Hygieneproblemen und erhöhter Störungsanfälligkeit.

Aus US 5473972 ist eine Kaffeemaschine mit einer in einem Gehäuse der Kaffeemaschine untergebrachten Einrichtung zur Bereitung von Milchschaum bekannt. Die Einrichtung zur Bereitung von Milchschaum (im Folgenden "Aufschäumeinrichtung") kann mit Milch versorgt werden, indem ein transportabler, mit Milch gefüllter Milchbehälter in einen Raumbereich unter der Aufschäumeinrichtung platziert wird und dabei ein Deckel des Milchbehälters mit einem Wandabschnitt des Kaffeemaschinengehäuses verbunden wird, welcher Wandabschnitt unterhalb der Aufschäumeinrichtung angeordnet und parallel zum Deckel des Milchbehälters ausgerichtet ist. Bei diesem Vorgang muss gleichzeitig eine Fluidverbindung zwischen einer im Kaffeemaschinengehäuse untergebrachten Versorgungsleitung zur Versorgung der Aufschäumeinrichtung mit Milch und einem Rohrelement hergestellt werden, mit welchem Milch aus dem Milchbehälter entnehmbar ist. Das Rohrelement ist am Deckel des Milchbehälters befestigt und weist einen eine Eintrittsöffnung für die Milch aufweisenden Abschnitt auf, welcher vom Deckel ausgehend in den Milchbehälter hineinragt, und ist derart durch den Deckel geführt, dass ein Abschnitt des Rohrelements sich oberhalb des Deckels vertikal nach oben erstreckt, wobei das Rohrelement an seinem oberen Ende eine Austrittsöffnung für die Milch aufweist. Um die genannte Fluidverbindung zwischen dem Rohrelement und der Versorgungsleitung zur Versorgung der Aufschäumeinrichtung mit Milch und herzustellen, muss ein an der Oberseite des Milchbehälters zugänglicher Abschnitt des Rohrelements über seine gesamte Länge in seiner Längsrichtung in einen im Kaffeemaschinengehäuse vertikal nach unten ragenden Abschnitt der Versorgungsleitung gesteckt werden. Um zu gewährleisten, dass die Verbindung zwischen der Versorgungsleitung und dem Rohrelement fluiddicht ist, ist das Rohrelement mit einem Dichtring umgeben, welcher in einem Abstand vom oberen Ende des Rohrelements angeordnet und mit dem Deckel des Milchbehälters verbunden ist. Der Abstand des Dichtrings vom oberen Ende des Rohrelements ist so bemessen, dass das untere Ende der Versorgungsleitung mit dem Dichtring in Kontakt gebracht wird, wenn der Milchbehälter mit dem Kaffeemaschinengehäuse verbunden wird und dabei der obere Abschnitt des Rohrelements in das untere Ende der Versorgungsleitung gesteckt wird. Diese Art der Bereitstellung von Milch hat den Nachteil, dass der Milchbehälter mit grosser Genauigkeit sowohl horizontal als auch vertikal relativ zum Gehäuse der Kaffeemaschine bzw. zur Versorgungsleitung bewegt und positioniert werden muss, um eine Fluidverbindung zwischen dem Rohrelement und der Versorgungsleitung herstellen zu können. Die Herstellung der Fluidverbindung ist deshalb umständlich, zeitaufwändig und bei engen Platzverhältnissen schwierig durchführbar oder nicht praktikabel. Weiterhin müssen die Abmessungen verschiedener Teile der Kaffeemaschine und des Milchbehälters, welche Teile bei der Herstellung der Fluidverbindung miteinander verbunden werden müssen, relativ präzise aufeinander abgestimmt sein. Die Konstruktion und die Herstellung dieser Teile sind deshalb relativ aufwändig und kostspielig.

Der vorliegenden Erfindung liegt die Aufgabe zugrunde, die genannten Nachteile zu vermeiden und eine Vorrichtung zu schaffen, welche eine schnelle Bereitstellung frischer Milch für ein Kaffeegetränk gegebenenfalls über einen langen Zeitraum hinweg auf einfache und kostengünstige Art und Weise gewährleistet.

Diese Aufgabe wird gelöst durch eine Vorrichtung zum Bereitstellen von Milch für eine Kaffeemaschine nach Anspruch 1.

Diese Vorrichtung zum Bereitstellen von Milch umfasst einen Milchbehälter, welcher einen Grundbehälter zur Aufnahme der Milch, einen auf dem Grundbehälter angeordneten Deckel und wenigstens ein für die Milch durchgängiges Rohrelement aufweist, wobei das jeweilige Rohrelement einen eine Eintrittsöffnung für die Milch aufweisenden Abschnitt aufweist, welcher vom Deckel ausgehend in den Grundbehälter hineinragt, und die jeweilige Eintrittsöffnung mit einer an einer Oberseite des Deckels angeordneten Austrittsöffnung für die Milch in Fluidverbindung steht und wobei an der jeweiligen Austrittsöffnung jeweils eine elastische Dichtmanschette angeordnet ist, welche die Austrittsöffnung umgibt. Die Vorrichtung zum Bereitstellen von Milch umfasst weiterhin einen vorgegebenen Raumbereich zur Aufnahme des Milchbehälters, in welchem Raumbereich der Milchbehälter platzierbar und aus welchen Raumbereich der Milchbehälter entfernbar ist. Weiterhin umfasst die Vorrichtung ein Andocksystem für den Milchbehälter, welches Andocksystem ein oberhalb des vorgegebenen Raumbereichs angeordnetes, bewegbares Andockstück zum Andocken an den Milchbehälter aufweist, wobei das Andockstück wenigstens eine Öffnung zum Aufnehmen der Milch aufweist, die jeweilige Öffnung an einer Unterseite des Andockstücks ausgebildet ist, das Andockstück wenigstens ein Anschlusselement zum Entnehmen von Milch aufweist und wobei jeweils eines der jeweiligen Anschlusselemente mit jeweils einer der jeweiligen Öffnungen des Andockstücks über eine zugehörige Flüssigkeitsleitung kommuniziert.

Gemäss der Erfindung ist das Andockstück derart geführt, dass es in eine obere Position und eine untere Position bringbar ist. Falls der Milchbehälter im vorgegebenen Raumbereich platziert ist und das Andockstück in die obere Position gebracht ist, ist das Andockstück nicht mit der Dichtmanschette in Kontakt und die Dichtmanschette derart geformt, dass zumindest ein Abschnitt der Dichtmanschette nach oben über die jeweilige Austrittsöffnung hinausragt. Falls der Milchbehälter im vorgegebenen Raumbereich platziert ist und das Andockstück in die untere Position gebracht wird, ist die Unterseite des Andockstücks derart gegen die Dichtmanschette gedrückt, dass die Dichtmanschette in vertikaler Richtung komprimiert ist und am Andockstück längs einer geschlossenen, die jeweilige Öffnung umschliessenden Linie flüssigkeitsdicht anliegt.

Ein wesentlicher Punkt der Erfindung besteht dabei in der vertikalen Beweglichkeit des Andockstücks. Dieses lässt eine schnelle Kopplung eines geeigneten Milchbehälters zu, indem das Andockstück einfach gegen den Behälter verfahren bzw. gedrückt wird. Über die jeweiligen Öffnungen an der Unterseite des Andockstücks kann dann auf einfache Weise eine Flüssigkeitsverbindung zu der im Behälter befindlichen Milch hergestellt werden. Der Behälter kann damit z.B. in einem Kühlschrank bereitgehalten werden, und frische Milch wesentlich schneller als bisher gekannt angedockt bzw. abgedockt und dann wieder gekühlt oder nachgefüllt werden. Über die einzelnen Öffnungen des Andockstücks kann die Milch dabei unterschiedlichen Verarbeitungsprozessen zugeführt werden, die sich aus einem gewünschten Kaffeegetränk ergeben. So kann z.B. über eine Öffnung Milch zur Erzeugung von Milchschaum, über eine andere Öffnung Milch zum Erhitzen und über eine weitere Öffnung Milch zur Zugabe von Geschmacksstoffen transportiert werden. Da die Milch über getrennte Flüssigkeitsleitungen befördert wird, ergeben sich weder Qualitätseinbussen noch Reinigungsprobleme, wie sie sich bei einer alternativen Verwendung eines Umschaltventils von einer Öffnung auf unterschiedliche Leitungen ergeben könnten.

Dadurch, dass das Andockstück nicht mit der Dichtmanschette in Kontakt ist, wenn der Milchbehälter im vorgegebenen Raumbereich platziert ist und das Andockstück in die obere Position gebracht ist, wird erreicht, dass der Milchbehälter im vorgegebenen Raumbereich platziert werden kann, ohne ihn mit dem Andockstück in Kontakt bringen zu müssen. Dabei ist vorteilhaft, dass der Milchbehälter in der Regel auch manuell in dem vorgegebenen Raumbereich platziert werden kann, ohne eine Bewegung in vertikaler Richtung relativ zu dem Andockstück präzise kontrollieren zu müssen. Der Milchbehälter könnte beispielsweise im vorgegebenen Raumbereich auf einer ebenen Stellfläche platziert werden, welche einen hinreichend grossen Abstand zur oberen Position des Andockstücks aufweist. Um den Milchbehälter in diesem Fall relativ zum Andockstück in eine bestimmte Position zu bringen, könnte der Milchbehälter beispielsweise einfach auf der Stellfläche horizontal verschoben werden, beispielsweise in einer geradlinigen Bewegung. Der Milchbehälter kann so auf einfache Weise unter dem Andockstück platziert werden, ohne den Milchbehälter mit dem Andockstück in Kontakt zu bringen.

Dadurch, dass in dem Falle, dass der Milchbehälter im vorgegebenen Raumbereich platziert ist und das Andockstück in die obere Position gebracht ist, zumindest ein Abschnitt der Dichtmanschette nach oben über die jeweilige Austrittsöffnung hinausragt, wird erreicht, dass die Dichtmanschette mittels des Andockstücks über eine relativ grosse Distanz in vertikaler Richtung komprimiert werden kann, wenn die Unterseite des Andockstücks mit der Dichtmanschette in Kontakt gebracht wird und das Andockstück anschliessend gegen den Deckel des Milchbehälters gedrückt wird. Die jeweilige Höhe der Position des Andockstücks kann in diesem Fall in der Regel so weit reduziert werden, bis das Andockstück entweder das Rohrelement oder den Deckel des Milchbehälters berührt. Um zu gewährleisten, dass die Dichtmanschette jeweils flüssigkeitsdicht an der Unterseite des Andockstücks anliegt, genügt es allerdings in der Regel, dass die Dichtmanschette am Andockstück längs einer geschlossenen, die jeweilige Öffnung umschliessenden Linie anliegt und das Andockstück mit einem Anpressdruck gegen die Dichtmanschette gedrückt wird, welcher einen vorgegebenen Mindestwert erreicht oder überschreitet. Bei der erfindungsgemässen Vorrichtung ist daher gewährleistet, dass die Dichtmanschette jeweils Toleranzen der Position des Deckels des Milchbehälters, der Position des Rohrelementes bzw. der Austrittsöffnung für die Milch und der Position der Unterseite des Andockstücks innerhalb bestimmter Grenzen (abhängig z.B. von den elastischen Eigenschaften oder der Form der jeweiligen Dichtmanschette) kompensiert.

Bei der erfindungsgemässen Vorrichtung zum Bereitstellen von Milch sind das Andocksystem und der Milchbehälter so bemessen und aufeinander abgestimmt, dass in einem Andockzustand, bei dem die Unterseite des Andockstücks gegen die Dichtmanschette gedrückt ist, die jeweilige Öffnung des Andockstücks und jeweils eine der jeweiligen Austrittsöffnungen an der Oberseite des Deckels des Milchbehälters über eine jeweils zugehörige, zwischen der Oberseite des Deckels und der Unterseite des Andockstücks liegende Dichtmanschette dicht miteinander verbunden sind. Dabei ist es notwendig, dass das Andockstück mit dem Deckel des Milchbehälters oder dem Rohrelement verbunden ist.

Ein wesentlicher Vorteil der erfindungsgemässen Vorrichtung besteht in der konstruktiv einfach gelösten Kopplung zwischen dem Andocksystem und dem Milchbehälter, die lediglich ein vertikal beweglich geführtes Andockstück und einen darauf abgestimmten Behälter erfordert. Dadurch wird der Behälter einerseits besonders schnell koppel- und entkoppelbar, andererseits kann er aber auch - in einer entsprechenden Kühleinheit aufgenommen - über lange Zeit angedockt bleiben, ohne Qualitätsverluste der Milch befürchten zu müssen.

In einer bevorzugten Ausführungsform der erfindungsgemässen Vorrichtung ist das Andocksystem mit einem Bedienmechanismus ausgestattet, der zum manuellen Bewegen des Andockstücks durch einen Nutzer ausgelegt ist. Dadurch wird eine besonders einfache, sichere und wartungsfreundliche Benutzung der Vorrichtung möglich. Denkbar ist aber auch, den Bedienmechanismus elektromotorisch auszugestalten.

Um einen definierten Anpressdruck gegen den Milchbehälter herzustellen, ist das Andockelement bevorzugt gegen ein elastisch federndes Stellelement gelagert. Dadurch wird eine erforderliche Dichtheit der Verbindung zwischen dem Behälter und dem Andockstück gewährleistet bzw. verbessert.

Die Unterseite des Andockstücks, also die dem Milchbehälter zugewandte Seite des Andockstücks, ist bevorzugt als eine ebene Fläche ausgebildet, um die dichtende Anlage elastischer Dichtungselemente zwischen Andockstück und Milchbehälter zu ermöglichen. Die Unterseite des Andockstücks kann dazu auch selbst mit einer elastischen Schicht versehen sein.

Um die vertikale Beweglichkeit des Andockstücks auf besonders einfache konstruktive Art herzustellen, sind die Flüssigkeitsleitungen bevorzugt als elastische Schläuche ausgelegt, die sich zwischen der wenigstens einen verfahrbaren Öffnung des Andockstücks und einer raumfesten Lage des wenigstens einen Anschlusselements erstrecken.

Bei einer weiteren Ausführungsform der erfindungsgemässen Vorrichtung ragen die jeweiligen Rohrelemente wenigstens teilweise über die Oberseite eines Deckels des Milchbehälters hinaus. Dies hat den Vorteil, dass an dem jeweils über die Oberseite des Deckels hinausragenden Abschnitt des jeweiligen Rohrelements eine Dichtmanschette gemäss der Erfindung auf besonders einfache Weise befestigt werden kann. Die jeweilige Manschette muss zu diesem Zweck lediglich so geformt sein, dass sie auf den über die Oberseite des Deckels hinausragenden Abschnitt des jeweiligen Rohrelements dichtend aufgesteckt werden kann.

Zur besonders einfachen Entnahme der Milch aus dem jeweiligen Milchbehälter ist bevorzugt eine Ansaugeinheit zum Ansaugen der Milch vorgesehen. Die Ansaugeinheit kann beispielsweise mit dem jeweiligen Anschlusselement derart verbunden sein, dass in der jeweiligen Flüssigkeitsleitung ein Sog zum Ansaugen der Milch aus dem Grundbehälter erzeugbar ist.

Obwohl der Milchbehälter schnell und einfach an das Andocksystem angedockt werden kann bzw. mit diesem koppelbar ist, kann es auch bevorzugt sein, eine Kühleinheit zum Aufnehmen des Milchbehälters vorzusehen. Der Milchbehälter muss dann nur noch zum Auffüllen frischer Milch oder zum Reinigen abgedockt werden. Ein weiterer Aufwand ist somit mit der Bereitstellung frischer Milch nicht mehr verbunden.

Der Vorteil der vorliegenden Erfindung wird auch durch eine Kaffeemaschine in Kombination mit einer erfindungsgemässen Vorrichtung zum Bereitstellen von Milch erzielt. Ein wesentlicher Punkt einer derartigen Kaffeemaschine besteht dabei darin, dass diese die Möglichkeit bietet, einen Milchbehälter auf einfache und schnelle Art anzudocken. Dabei kann das Andocksystem sowohl als integraler Teil der Kaffeemaschine ausgeführt oder auch über das wenigstens eine Anschlusselement lösbar mit der Kaffeemaschine verbindbar sein. Durch eine lösbare, insbesondere standardisierte Verbindung des wenigstens einen Anschlusselements mit der Kaffeemaschine wird ein Andocksystem zur Verfügung gestellt, das die Nachrüstung bereits vorhandener Kaffeemaschinen mit diesem Andocksystem erlaubt.

Ein wesentlicher Punkt der Erfindung besteht weiterhin in dem besonders einfachen Aufbau des Milchbehälters, der zum Entnehmen der Milch lediglich eines entsprechenden Deckels mit den besagten Rohrelementen und zugehöriger Dichtmanschetten bedarf. Ein solcher Deckel ist damit einfach und kostengünstig herstellbar sowie durch seine einfache Handhabbarkeit auch leicht zu reinigen.

Ein Vorteil entsteht dadurch, wenn das jeweilige Rohrelement lösbar mit dem Deckel verbunden werden kann. Die Rohrelemente sind damit aus hygienischen Gründen komplett auswechselbar oder auch leichter zu reinigen und wiederzuverwenden. Dazu können sie z.B. an den Deckel steckbar, klemmbar oder mit diesem verschraubbar sein. Die Rohrelemente können grundsätzlich in starrer oder elastischer Form ausgebildet sein, z.B. als Kunststoff- oder Metallröhrchen oder als Kunststoffschlauch.

Die Dichtmanschetten können grundsätzlich konventioneller Art sein und in einem Querschnitt ein z.B. ringförmiges oder auch rechteckiges Profil aufweisen. Im Deckel des Milchbehälters kann eine entsprechende Nut zum Aufnehmen der Manschetten vorgesehen sein. Eine einen rechteckigen Querschnitt aufweisende Manschette lässt sich aber auch direkt an der Oberseite des Deckels verkleben. Gleich mehrere Vorteile entstehen aber dadurch, wenn die wenigstens eine Dichtmanschette die Form eines Trichters aufweist, der sich in einer Richtung öffnet, die von der Oberseite des Deckels weg weist. Eine solche Manschette zieht sich bei Beaufschlagung mit einem Ansaugdruck zum Transport der Milch sozusagen zusammen und erhöht den Anpressdruck auf eine gegenüberliegende Dichtfläche. Zudem werden nach Entkopplung des Milchbehälters Tropfen zurückfliessender Milch oder auch Reinigungsflüssigkeit in dem Trichter der Manschette aufgefangen und verschmutzen nicht den Deckel des Behälters. Darüber hinaus werden Lagetoleranzen des Behälters gegenüber den (Ansaug-)Öffnungen des Andocksystems ausgeglichen.

Derartig trichterförmige Dichtmanschetten sind besonders einfach an dem Deckel anzubringen, wenn das wenigstens eine der Rohrelemente den Deckel durchtritt und wenigstens teilweise über dessen Oberfläche hinaus ragt. Damit muss die Manschette lediglich so dimensioniert sein, dass sie auf das überstehende Rohrelement dichtend aufgesteckt werden kann.

Der vorstehende Vorteil der vorliegenden Erfindung wird auch durch ein Verfahren zum Bereitstellen von Milch mithilfe einer erfindungsgemässen Vorrichtung zum Bereitstellen von Milch erzielt.

Bei diesem Verfahren wird das Andockstück des jeweiligen Andocksystems zum Entnehmen von Milch aus dem jeweiligen Milchbehälter gegen einen Deckel des Milchbehälters gedrückt, sodass die wenigstens eine Austrittsöffnung an der Oberseite des Deckels des Milchbehälters über eine Dichtmanschette dicht mit der wenigstens einen Öffnung des Andockstücks verbunden wird, und ein Unterdruck erzeugt wird, der die Milch aus dem Milchbehälter über die so geschaffene Verbindung in das Andockstück strömen lässt. Dieses Verfahren zeichnet sich durch seinen einfachen und effizienten Ablauf aus und ist konstruktiv besonders einfach und kostengünstig realisierbar.

Die vorliegende Erfindung wird im Folgenden anhand eines Ausführungsbeispiels unter Bezugnahme auf die beiliegenden Figuren näher erläutert. Gleiche oder gleichwirkende Teile sind mit gleichen Bezugsziffern bezeichnet. Es zeigen:
- Figur 1: eine quergeschnittene Ansicht einer Vorrichtung zum Bereitstellen von Milch für eine Kaffeemaschine, mit einem in einer Kühleinheit angeordneten Milchbehälter und einem Andocksystem für den Milchbehälter, wobei sich der Behälter in einem entkoppelten Zustand befindet, und
- Figur 2: die Ansicht der Figur 1, bei welcher sich der Milchbehälter in einem gekoppelten bzw. angedockten Zustand befindet.

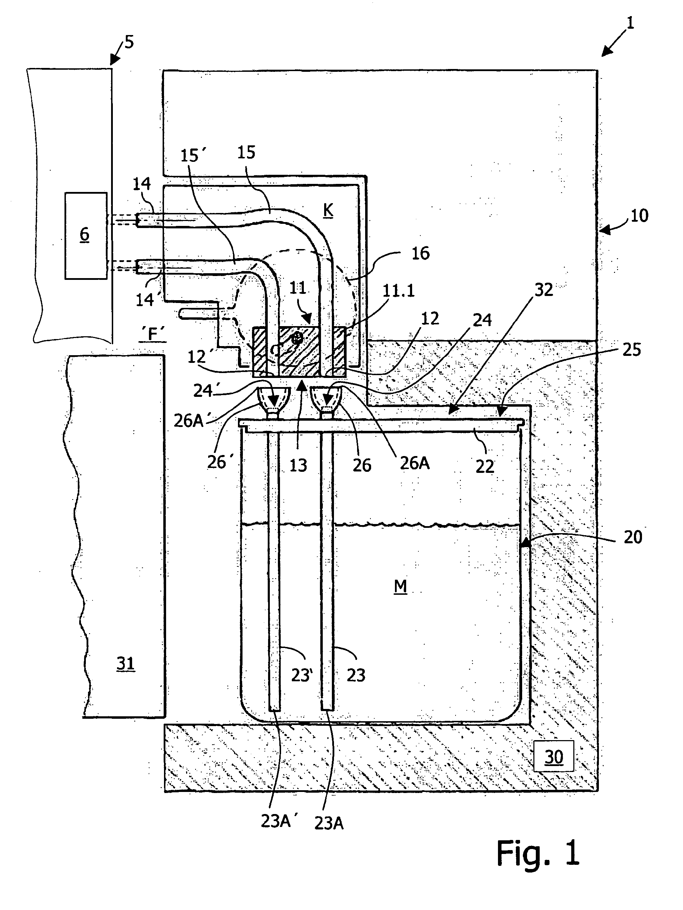

Die Figur 1 zeigt eine Vorrichtung 1 zum Bereitstellen von Milch M mit einem Andocksystem 10 für einen Milchbehälter 20 mit einer darunter angebrachten Kühleinheit 30, in der sich der Behälter 20 in einem entkoppelten Zustand F (in welchem der Milchbehälter 20 nicht an das Andocksystem 10 gekoppelt bzw. angedockt ist) befindet. An einer Unterseite 13 eines vertikal beweglich geführten Andockstücks 11 sind dabei zwei Öffnungen 12, 12' zum Ansaugen von Milch M aus dem Behälter 20 vorgesehen. Die Öffnungen 12, 12' sind mit Anschlusselementen 14, 14' über flexible Flüssigkeitsleitungen 15, 15' verbunden, die sich gegenüber den raumfest angeordneten Anschlusselementen 14, 14' verformen, wenn das Andockstück 11 vertikal bewegt wird. Über die Anschlusselemente 14, 14' kann eine Kaffeemaschine 5 mit dem Andocksystem 10 gekoppelt werden. Zur Bewegung des Andockstücks 11 in Richtung des Milchbehälters 20 ist ein Bedienmechanismus 16 vorgesehen, der einen Hebel aufweist, welcher an einer Kulisse geführt ist (beides nicht im Detail bezeichnet). Die Öffnungen 12, 12' des Andockstücks 11 sind dabei auf an einer Oberseite des Milchbehälters 20 ausgebildete Austrittöffnungen 24, 24' für die Milch ausgerichtet und werden beim Herunterdrücken des Andockstücks 11 durch einen Nutzer mit diesen Austrittöffnungen 24, 24' in eine (für Flüssigkeiten wie z.B. Milch) dichte Verbindung gebracht.

Der Milchbehälter 20 selbst wird über einen mit einer Tür 31 verschliessbaren Zugang in einem vorgegebenen Raumbereich 32 in der Kühleinheit 30 platziert. Aus Herstellungs- und Wartungsgründen ist das Andockstück 11 mit dem Bedienmechanismus 16, den Flüssigkeitsleitungen 15, 15' und den Anschlusselementen 14, 14' in einer Kassetteneinheit K untergebracht.

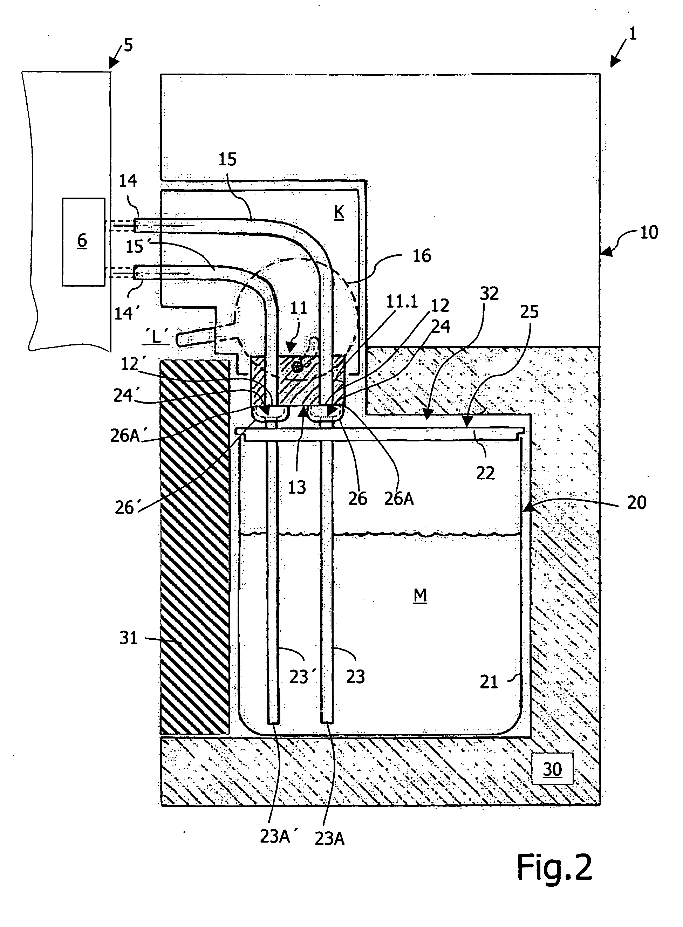

Die Figur 2 zeigt die Vorrichtung 1 in einer Situation, in welcher sich der Milchbehälter 20 in einem gekoppelten bzw. angedockten Zustand L befindet. Durch Herunterdrücken des Andockstücks 11 in Richtung einer Oberfläche 25 eines Deckels 22 des Milchbehälters 20 werden dabei elastische Dichtmanschetten (bzw. Tüllen) 26, 26' in dichten Kontakt mit der Unterseite 13 des Andockstücks 11 gebracht. Die Austrittöffnungen 24, 24' für die Milch M, welche an der Oberseite des Deckels 22 des Behälters 20 angeordnet sind und welche in diesem Beispiel durch den Deckel 22 durchmessende Rohrelemente (bzw. Saugrohre) 23, 23' gebildet werden, kommunizieren nun flüssigkeitsdicht mit den Öffnungen 12, 12' des Andockstücks 11. Die an der Oberseite 25 des Deckels 22 überstehenden Enden der Rohrelemente 23, 23' werden hier zum Anbringen der Dichtmanschetten 26, 26' benutzt, welche an diesen Enden aufgesteckt sind. Die Dichtmanschetten 26, 26' sind dabei so ausgebildet, dass sie einerseits möglichst grosse vertikale Lagetoleranzen des Behälterdeckels 22 sowie des Andockstücks 11 aufnehmen können, und dabei sicher dicht bleiben sowie ein sauberes Zurückfliessen der Milch oder einer Reinigungsflüssigkeit in den Behälter 20 nach dem Entkoppeln des Andockstücks 11 gewährleisten. Die Dichtmanschetten 26 bzw. 26' sind zu diesem Zweck derart geformt, dass sie die jeweilige Austrittsöffnung 24, 24' ringförmig umgeben und weiterhin jeweils einen oberen Rand 26A bzw. 26A' aufweisen, welcher nach oben über die jeweilige Austrittsöffnung 24 bzw. 24' hinausragt. Je weiter der jeweilige obere Rand 26A bzw. 26A' der jeweiligen Dichtmanschette 26 bzw. 26' nach oben über die jeweilige Austrittsöffnung 24 bzw. 24' hinausragen, desto grösser sind die vertikalen Lagetoleranzen des Behälterdeckels 22 sowie des Andockstücks 11, welche von den jeweiligen Dichtmanschetten 26, 26' kompensiert werden können. Der obere Rand 26A bzw. 26A' der jeweiligen Dichtmanschette 26 bzw. 26' weist (in einer horizontalen Ebene) einen ringförmigen Querschnitt auf, welcher so bemessen ist, dass der jeweilige obere Rand 26A bzw. 26A' am Andockstück 11 längs einer geschlossenen, die jeweilige Öffnung 12 bzw. 12' umschliessenden Linie flüssigkeitsdicht anliegt, wenn das Andockstück 11 von oben gegen die jeweilige Dichtmanschette 26 bzw. 26' gedrückt wird (wie Fig. 2 andeutet).

Wie Fig. 1 und 2 weiterhin andeuten, weisen die jeweiligen Dichtmanschetten 26, 26' jeweils die Form eines Trichters auf, welcher sich nach oben öffnet. Demnach weisen die Dichtmanschetten 26, 26' jeweils einen Innenquerschnitt auf, dessen Fläche in Richtung einer Vertikalen als Funktion des jeweiligen Abstands vom Deckel 22 wächst. Letztes ermöglicht u.a. ein sauberes Zurückfliessen der Milch oder einer Reinigungsflüssigkeit aus den jeweiligen Flüssigkeitsleitungen 15, 15' in den Behälter 20, wenn das Andockstück 11 von den Dichtmanschetten 26, 26' entkoppelt wird (entsprechend Fig. 1).

Wie Fig. 1 und 2 andeuten, weisen die Rohrelemente 23, 23' an ihrem unteren Ende jeweils eine Eintrittsöffnung 23a bzw. 23A' für die Milch auf. Die Rohrelemente 23, 23' reichen dabei so tief wie möglich in einen Grundbehälter 21 des Milchbehälters 20 hinein, um das Milchvolumen auszuschöpfen. Die Tür 31 der Kühleinheit 30 ist nun zur dauerhaften Kühlung der Milch M geschlossen. Bei geöffneter Tür 31 kann der Milchbehälter in einer geradlinigen Bewegung in die Kühleinheit 30 eingeführt und aus dieser entnommen werden.

Das hier gezeigte Andocksystem 10 für einen Milchbehälter 20 ist über die Anschlusselemente 14, 14' mit einer Kaffeemaschine verbindbar und kann somit flexibel an bereits vorhandene Kaffeemaschinen angeschlossen werden. Es kann aber auch als integraler Teil einer Kaffeemaschine ausgeführt sein.

Im vorliegenden Beispiel gemäss Fig. 1 und 2 ist das Andocksystem 10 mit einer Kaffeemaschine 5 verbunden: Die Anschlusselemente 14 und 14' sind zu diesem Zweck an eine Ansaugeinheit 6 der Kaffeemaschine 5 angeschlossen. Mittels der Ansaugeinheit 6 kann - nach dem Andocken des Andockstücks 11 an den Milchbehälter 20 (Zustand L gemäss Fig. 2) - Milch aus dem Milchbehälter 20 über die Rohrelemente 23, 23' und die Flüssigkeitsleitungen 15, 15' angesaugt werden, um die angesaugte Milch einer weiteren Verarbeitung zuführen zu können. Die weitere Verarbeitung der angesaugten Milch kann innerhalb und/oder ausserhalb eines (in Fig. 1 und 2 nicht dargestellten) Gehäuses der Kaffeemaschine 5 erfolgen, wobei die über die Flüssigkeitsleitung 15 angesaugte Milch und die über die Flüssigkeitsleitung 15' angesaugte Milch auf jeweils gleiche oder auf verschiedene Weisen weiterverarbeitet werden können: Die jeweils angesaugte Milch kann beispielsweise erwärmt oder mit Luft gemischt werden, um heisse Milch oder Milchschaum zu erzeugen.

Die Kassette K mit dem darin vorgesehenen Andockstück 11, den Elementen 14, 14', den Leitungen 15, 15' und der Bedienungsmechanik 16 kann fest oder zu Reinigungszwecken entnehmbar in dem Andocksystem 10 verbaut sein.

Da der Milchbehälter 20 sehr schnell mit dem Andocksystem 10 koppelbar ist, muss auch nicht notwendigerweise eine Kühleinheit 30 vorgesehen sein. Der Behälter kann alternativ auch in einem Kühlschrank bereitgestellt und nur von Zeit zu Zeit entnommen werden. In jedem Fall ist eine schnelle Bereitstellung frischer Milch für ein Kaffeegetränk über einen langen Zeitraum hinweg auf einfache und kostengünstige Art und Weise gewährleistet.

## Patentansprüche

1. Vorrichtung (1) zum Bereitstellen von Milch (M) für eine Kaffeemaschine (5), welche Vorrichtung umfasst:
einen Milchbehälter (20), welcher
einen Grundbehälter (21) zur Aufnahme der Milch,
einen auf dem Grundbehälter (21) angeordneten Deckel (22) und
wenigstens ein für die Milch durchgängiges Rohrelement (23, 23') aufweist, wobei das jeweilige Rohrelement (23, 23') einen eine Eintrittsöffnung (23A) für die Milch aufweisenden Abschnitt aufweist, welcher vom Deckel (22) ausgehend in den Grundbehälter (21) hineinragt, und die jeweilige Eintrittsöffnung (23A) mit einer an einer Oberseite (25) des Deckels (22) angeordneten Austrittsöffnung (24, 24') für die Milch in Fluidverbindung steht und wobei an der jeweiligen Austrittsöffnung (24, 24') jeweils eine elastische Dichtmanschette (26, 26') angeordnet ist, welche die Austrittsöffnung (24, 24') umgibt;
einen vorgegebenen Raumbereich (32) zur Aufnahme des Milchbehälters (20), in welchem Raumbereich (32) der Milchbehälter (20) platzierbar und aus welchem Raumbereich (32) der Milchbehälter (20) entfernbar ist;
ein Andocksystem (10) für den Milchbehälter (20), welches Andocksystem (10) ein oberhalb des vorgegebenen Raumbereichs (32) angeordnetes, bewegbares Andockstück (11) zum Andocken an den Milchbehälter (20) aufweist, wobei das Andockstück (11) wenigstens eine Öffnung (12, 12') zum Aufnehmen der Milch (M) aufweist, die jeweilige Öffnung (12, 12') an einer Unterseite (13) des Andockstücks (11) ausgebildet ist, das Andockstück (11) wenigstens ein Anschlusselement (14, 14') zum Entnehmen von Milch (M) aufweist und wobei jeweils eines der jeweiligen Anschlusselemente (14, 14') mit jeweils einer der jeweiligen Öffnungen (12, 12') des Andockstücks (11) über eine zugehörige Flüssigkeitsleitung (15, 15') kommuniziert,
**dadurch gekennzeichnet, dass**
das Andockstück (11) derart geführt ist, dass es in eine obere Position (F) und eine untere Position (L) bringbar ist,
dass, falls der Milchbehälter (20) im vorgegebenen Raumbereich (32) platziert ist und das Andockstück (11) in die obere Position (F) gebracht ist, das Andockstück (11) nicht mit der Dichtmanschette (26, 26') in Kontakt ist und die Dichtmanschette (26, 26') derart geformt ist, dass zumindest ein Abschnitt (26A, 26A') der Dichtmanschette (26, 26') nach oben über die jeweilige Austrittsöffnung (24, 24') hinausragt, und
dass, falls der Milchbehälter (20) im vorgegebenen Raumbereich (32) platziert ist und das Andockstück (11) in die untere Position (L) gebracht wird, die Unterseite (13) des Andockstücks derart gegen die Dichtmanschette (26, 26') gedrückt ist, dass die Dichtmanschette (26, 26') in vertikaler Richtung komprimiert ist und am Andockstück (11) längs einer geschlossenen, die jeweilige Öffnung (12, 12') umschliessenden Linie flüssigkeitsdicht anliegt.

2. Vorrichtung (1) nach Anspruch 1, wobei die jeweilige Dichtmanschette (26, 26') die Form eines Trichters aufweist, der sich in einer Richtung öffnet, die von der Oberseite (25) des Deckels (22) weg weist.

3. Vorrichtung nach einem der Ansprüche 1 oder 2, wobei die jeweilige Dichtmanschette (26, 26') an einer von dem Deckel (22) des Milchbehälters (20) abgewandten Seite einen ringförmig ausgebildeten Rand (26A, 26A') aufweist.

4. Vorrichtung nach einem der Ansprüche 1-3, wobei die jeweilige Dichtmanschette (26, 26') einen Innenquerschnitt aufweist, dessen Fläche in Richtung einer Vertikalen als Funktion des jeweiligen Abstands vom Deckel (22) wächst.

5. Vorrichtung (1) nach einem der vorherigen Ansprüche, wobei das jeweilige Rohrelement (23, 23') mit der jeweiligen Dichtmanschette (26, 26') verbunden ist.

6. Vorrichtung (1) nach einem der vorherigen Ansprüche, wobei das jeweilige Rohrelement (23, 23') lösbar mit dem Deckel (22) verbunden werden kann.

7. Vorrichtung (1) nach einem der vorherigen Ansprüche, das mit einem Bedienmechanismus (16) ausgestattet ist, der zum manuellen Bewegen des Andockstücks (11) durch einen Nutzer ausgelegt ist.

8. Vorrichtung (1) nach einem der vorherigen Ansprüche, bei welcher das Andockstück (11) gegen ein elastisch federndes Stellelement gelagert ist.

9. Vorrichtung (1) nach einem der vorstehenden Ansprüche, bei welcher die Unterseite (13) des Andockstücks (11) als eine ebene Fläche ausgebildet ist.

10. Vorrichtung (1) nach einem der vorstehenden Ansprüche, bei welcher die jeweilige Flüssigkeitsleitung (15, 15') als elastischer Schlauch ausgelegt ist.

11. Vorrichtung (1) nach einem der vorstehenden Ansprüche, mit einer Ansaugeinheit (6), welche mit dem jeweiligen Anschlusselement (14, 14') derart verbunden ist, dass in der jeweiligen Flüssigkeitsleitung (15, 15') ein Sog zum Ansaugen der Milch (M) aus dem Grundbehälter (20) erzeugbar ist.

12. Vorrichtung (1) nach einem der vorstehenden Ansprüche, mit einer Kühleinheit (30) zum Aufnehmen eines Milchbehälters (20).

13. Kaffeemaschine (5) mit einer Vorrichtung (1) zum Bereitstellen von Milch (M) nach einem der vorstehenden Ansprüche, bei welcher die Vorrichtung (1) als integraler Teil der Kaffeemaschine (5) ausgeführt ist oder über das wenigstens eine Anschlusselement (14, 14') lösbar mit der Kaffeemaschine (5) verbunden ist.

## Claims

1. Apparatus (1) for providing milk (M) for a coffee maker (5), which apparatus comprises:
a milk container (20) having a base container (21) for receiving the milk and a lid (22) disposed on the base container (21), and
at least one continuous tube element (23, 23') for the milk, wherein the respective tube element (23, 23') has a section having an inlet opening (23A) for the milk, which protrudes into the base container (21) starting from the lid (22) and the respective inlet opening (23A) is in fluid connection with an outlet opening (24, 24') for the milk disposed on an upper side (25) of the lid (22), and wherein respectively one elastic sealing collar (26, 26') which surrounds the outlet opening (24, 24') is disposed at the respective outlet opening (24, 24');
a predefined spatial region (32) for receiving the milk container (20), in which spatial region (32) the milk container (20) can be placed and from which spatial region (32) the milk container (20) can be removed;
a docking system (10) for the milk container (20), which docking system (10) comprises a movable docking piece (11) disposed above the predefined spatial region (32) for docking to the milk container (20), wherein the docking piece (11) has at least one opening (12, 12') for receiving the milk (M), the respective opening (12, 12') is formed on an underside (13) of the docking piece, the docking piece (11) has at least one connection element (14, 14') for the removal of milk (M) and wherein each one of the respective connection elements (14, 14') communicates with each one of the respective openings (12, 12') of the docking piece (11) via an appurtenant fluid line (15, 15'),
**characterised in that**
the docking piece (11) is guided in such a manner that it can be brought into an upper position (F) and a lower position (L),
that if the milk container (20) is placed in the predefined spatial region (32) and the docking piece (11) is brought into the top position (F), the docking piece (11) has no contact with the sealing collar (26, 26') and the sealing collar (26, 26') is shaped such that at least one section (26A, 26A') of the sealing collar (26, 26') protrudes upward above the respective outlet opening (24, 24'), and
that if the milk container (20) is placed in the predefined spatial region (32) and the docking piece (11) is brought into the bottom position (L), the underside (13) of the docking piece is pressed against the sealing collar (26, 26') such that the sealing collar (26, 26') is compressed in the vertical direction and rests in a fluid-tight manner against the docking piece (11) along a closed curve enclosing the particular opening (12, 12').

2. The apparatus (1) according to claim 1, wherein the respective sealing collar (26, 26') has the shape of a funnel which opens in a direction pointing away from the upper side (25) of the lid (22).

3. The apparatus (1) according to claim 1 or 2, wherein the respective sealing collar (26, 26') has an annular-shaped edge (26A, 26A') on a side facing away from the lid (22) of the milk container (20).

4. The apparatus (1) according to any one of claims 1-3, wherein the respective sealing collar (26, 26') has an inner cross-section whose area increases as a function of the respective distance from the lid (22) in the direction of a vertical.

5. The apparatus (1) according to any one of the preceding claims, wherein the respective tube element (23, 23') is connected to the respective sealing collar (26, 26').

6. The apparatus (1) according to any one of the preceding claims, wherein the respective tube element (23, 23') can be detachably connected to the lid (22).

7. The apparatus (1) according to any one of the preceding claims, that is equipped with an operating mechanism (16) which is designed for the manual movement of the docking piece (11) by a user.

8. The apparatus (1) according to any one of the preceding claims, wherein the docking piece (11) is mounted against an elastically resilient actuator.

9. The apparatus (1) according to any one of the preceding claims, wherein the underside (13) of the docking piece (11) is configured as a flat surface.

10. The apparatus (1) according to any one of the preceding claims, wherein the respective fluid line (15, 15') is designed as an elastic hose.

11. The apparatus (1) according to any one of the preceding claims, having a suction unit (6) which is connected to the respective connection element (14, 14') in such a manner that a suction to extract the milk (M) from the base container (20) can be produced in the respective fluid line (15, 15').

12. The apparatus (1) according to any one of the preceding claims, having a chiller unit (30) for receiving a milk container (20).

13. A coffee maker (5) comprising an apparatus (1) for providing milk (M) according to any one of the preceding claims, in which the apparatus (1) is designed as an integral part of the coffee maker (5) or is detachably connected to the coffee maker (5) via the at least one connection element (14, 14').

## Revendications

1. Dispositif (1) pour la préparation de lait (M) pour une machine à café (5), lequel dispositif comprend :
un réservoir à lait (20), lequel comporte un réservoir de base (21) pour recevoir le lait,
un couvercle (22) disposé sur le réservoir de base (21) et
au moins un élément tubulaire (23, 23') continu pour le lait, l'élément tubulaire (23, 23') concerné comportant une partie comportant un orifice d'entrée (23A) pour le lait, lequel en partant du couvercle (22) saillit à l'intérieur du réservoir de base (21) et l'orifice d'entrée (23A) concerné étant en liaison par fluide avec un orifice de sortie (24, 24') pour le lait, disposé sur une face supérieure (25) du couvercle (22) et sur l'orifice de sortie (24, 24') concerné, une manchette d'étanchéité (26, 26') élastique, laquelle entoure l'orifice de sortie (24, 24') étant chaque fois disposée ;
une zone d'espace (32) prédéfinie pour recevoir le réservoir à lait (20) dans laquelle zone d'espace (32) le réservoir à lait (20) peut être placé et de laquelle zone d'espace (32) le réservoir à lait (20) peut se retirer ;
un système d'accostage (10) pour le réservoir à lait (20), lequel système d'accostage (10) comporte une pièce d'accostage (11) mobile, disposée au-dessus de la zone d'espace (32) prédéfinie, à accoster contre le réservoir à lait (20), le système d'accostage (11) comportant au moins un orifice (12, 12') pour recevoir le lait (M), l'orifice concerné (12, 12') étant conçu sur une face inférieure (13) de la pièce d'accostage (11), la pièce d'accostage (11) comportant au moins un élément de raccordement (14, 14') pour prélever du lait (M) et chaque fois l'un des éléments de raccordement (14, 14') concerné de la pièce d'accostage (11) communiquant via un conduit à liquide (15, 15') associé avec chaque fois l'un des orifices concernés (12, 12'), **caractérisé en ce que**
la pièce d'accostage (11) est guidée de sorte à pouvoir être amenée dans une position supérieure (F) et dans une position inférieure (L),
**en ce que**, lorsque le réservoir à lait (20) est placé dans la zone d'espace (32) prédéfinie et la pièce d'accostage (11) est amenée en position supérieure (F), la pièce d'accostage (11) n'est pas en contact avec la manchette d'étanchéité (26, 26') et la manchette d'étanchéité (26, 26') est formée de telle sorte qu'au moins une partie (26A, 26A') de la manchette d'étanchéité (26, 26') saillisse vers le haut, par-dessus l'orifice de sortie (24, 24') concerné et
**en ce que**, lorsque le réservoir à lait (20) est placé dans la zone d'espace (32) prédéfinie et la pièce d'accostage (11) est amenée en position inférieure (L), la face inférieure (13) de la pièce d'accostage est pressée contre la manchette d'étanchéité (26, 26') de sorte que la manchette d'étanchéité (26, 26') soit comprimée en direction verticale et s'appuie de manière étanche au liquide contre la pièce d'accostage (11), le long d'une ligne fermée, entourant l'orifice (12, 12') en question.

2. Dispositif (1) selon la revendication 1, la manchette d'étanchéité (26, 26') concernée présentant la forme d'un entonnoir qui s'ouvre dans une direction qui s'éloigne de la face supérieure (25) du couvercle (22).

3. Dispositif selon l'une quelconque des revendications 1 ou 2, sur un côté opposé au couvercle (22) du réservoir à lait (20), la manchette d'étanchéité (26, 26') concernée comportant un bord (26A, 26A') réalisé sous forme annulaire.

4. Dispositif selon l'une quelconque des revendications 1 3, la manchette d'étanchéité (26, 26') concernée comportant une section transversale intérieure dont la surface croit en direction d'une verticale, en tant que fonction de la distance respective par rapport au couvercle (22).

5. Dispositif (1) selon l'une quelconque des revendications précédentes, l'élément tubulaire (23, 23') concerné étant relié à la manchette d'étanchéité (26, 26') en question.

6. Dispositif (1) selon l'une quelconque des revendications précédentes, l'élément tubulaire (23, 23') concerné pouvant être relié de manière amovible avec le couvercle (22).

7. Dispositif (1) selon l'une quelconque des revendications précédentes, qui est équipé d'un mécanisme de manoeuvre (16) qui est conçu pour le déplacement manuel de la pièce d'accostage (11) par un utilisateur.

8. Dispositif (1) selon l'une quelconque des revendications précédentes, sur lequel la pièce d'accostage (11) est logée contre un élément de réglage élastique résilient.

9. Dispositif (1) selon l'une quelconque des revendications précédentes, sur lequel la face inférieure (13) de la pièce d'accostage (11) est réalisée en tant qu'une surface plane.

10. Dispositif (1) selon l'une quelconque des revendications précédentes, sur lequel le conduit à liquide (15, 15') concerné est conçu en tant que flexible élastique.

11. Dispositif (11) selon l'une quelconque des revendications précédentes, avec une unité d'aspiration (6) laquelle est reliée avec l'élément de raccordement (14, 14') concerné, de sorte que dans le conduit à liquide (15, 15') concerné, une succion puisse être créée pour l'aspiration du lait (M) hors du réservoir de base (20).

12. Dispositif (1) selon l'une quelconque des revendications précédentes, avec une unité de refroidissement (30) pour recevoir un réservoir à lait (20).

13. Machine à café (5) avec un dispositif (1) pour la préparation de lait (M) selon l'une quelconque des revendications précédentes, sur laquelle le dispositif (1) est réalisé en tant que partie intégrante de la machine à café (5) ou est relié de manière amovible avec la machine à café (5) par l'intermédiaire de l'au moins un élément de raccordement (14, 14').
